# EUROPÄISCHE PATENTSCHRIFT

(11) **EP 1 597 500 B1**
(45) Veröffentlichungstag und Bekanntmachung des Hinweises auf die Patenterteilung: **17.06.2009**
(21) Anmeldenummer: 03785514.5
(22) Anmeldetag: 14.11.2003
(51) Int. Cl.: F16K 17/06, G05D 16/10

(54) **DIREKTGESTEUERTES DRUCKBEGRENZUNGSVENTIL**
DIRECTLY CONTROLLED PRESSURE CONTROL VALVE
SOUPAPE DE LIMITATION DE PRESSION A COMMANDE DIRECTE

(30) Priorität: 26.02.2003 DE 10308487; 21.03.2003 DE 10312672
(43) Veröffentlichungstag der Anmeldung: 23.11.2005
(73) Patentinhaber: Bosch Rexroth AG, 70184 Stuttgart (DE)
(72) Erfinder: KRENZER, Günter, 97753 Karlstadt (DE); LAUER, Peter, 97816 Lohr (DE); MEYER, Karl-Josef, 97794 Rieneck (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2003/003783
(87) Internationale Veröffentlichungsnummer: WO 2004/076898

(56) Entgegenhaltungen:
- DE-A- 3 502 518
- DE-A- 19 955 083
- US-A- 3 196 901
- US-A1- 2002 029 806

## Beschreibung

Die Erfindung betrifft ein direktgesteuertes Druckbegrenzungsventil nach dem Oberbegriff des Patentanspruchs 1.

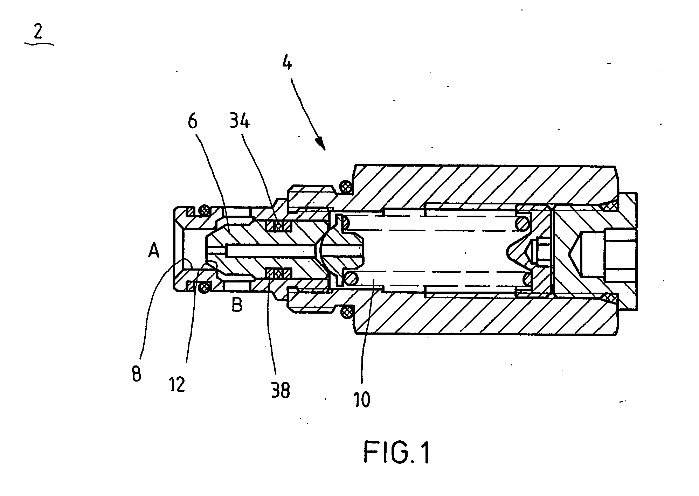

Ein derartiges Druckbegrenzungsventil (DBV) ist in Figur 1 dargestellt. Das dort abgebildete DBV geht zurück auf das Datenblatt RD 18 016-3.01/01.98 der Anmelderin. Figur 1 zeigt ein DBV 2 mit einem in einem Ventilgehäuse 4 geführten Sitzkolben 6. Der Sitzkolben 6 ist in einer Längsbohrung 8 aufgenommen und über eine Feder 10 gegen einen Ventilsitz 12 zum Sperren einer Druckmittelverbindung von einem zulaufseitigen Arbeitsanschluß A zu einem ablaufseitigen Arbeitsanschluß B vorgespannt. Der Sitzkolben 6 ist mit radialen Spiel in der Längsbohrung 8 angeordnet. In einer Umfangsnut 38 des Sitzkolbens 6 ist ein Dichtring 34 aufgenommen, der dichtend an der Innenumfangswandung der Längsbohrung 8 anliegt.

Nachteilig an dieser Lösung ist, daß der Sitzkolben in der geöffneten Stellung um den Dichtring in Längsrichtung Dreh- bzw. Kippbewegungen ausführen kann.

Durch das daraus resultierende Flattern wird der Sitzkolben stark mechanisch beansprucht, wodurch die Lebensdauer eines derartigen DBV reduziert ist.

Des Weiteren äußert sich das Flattern in einer störenden Geräuschentwicklung, wie zum Beispiel Pfeifen, und verhindert somit einen geräuscharmen Betrieb.

Die deutsche Patentanmeldung DE 35 02 518 offenbart ein Druckbegrenzungsventil, bei dem, um ein Flattern um die axiale Längsachse zu verhindern, der Steuerkolben eine radiale Bohrung aufweist, die über eine im Kolben angeordnete Längsbohrung den Federraum mit dem Steuerraum verbindet, und als Düse wirkt, an der ein Staudruck entsteht, der eine zusätzliche Kraft auf den Ventilkegel ausübt, die das Flattern dämpft. Zudem weist der Steuerkolben Ringnuten auf, die bewirken, dass rund um den Steuerkolben der gleiche Druck herrscht, so dass sich der Steuerkolben nicht einseitig an die Bohrungswandung anlegen kann.

Aufgabe der vorliegenden Erfindung ist es, ein direktgesteuertes Druckbegrenzungsventil zu schaffen, daß die vorgenannten Nachteile beseitigt und kostengünstig herzustellen ist.

Diese Aufgabe wird gelöst durch ein direktgesteuertes Druckbegrenzungsventil mit den Merkmalen nach dem Patentanspruch 1.

Das erfindungsgemäße Druckbegrenzungsventil (DBV) hat ein Ventilgehäuse mit einem zu- und einem ablaufseitigen Arbeitsanschluß. In dem Ventilgehäuse ist ein Sitzkolben gegen einen Ventilsitz vorgespannt. Erfindungsgemäß ist der Sitzkolben im Führungsbereich zumindest über zwei voneinander beabstandete, umfangsseitig auf dem Sitzkolben aufgesetzte, umlaufende Führungselemente in dem Ventilgehäuse abgestützt.

Erfindungsgemäß wird Druckmittel über Bohrungen im Sitzkolben vom ablaufseitigen Arbeitsanschluß in den Federraum geführt, so daß in diesem ein Druck anliegt, der etwa dem Druck an dem ablaufseitigen Arbeitsanschluß entspricht. Dabei ist in vorgespannter Grundstellung zumindest eine Querbohrung zum ablaufseitigen Arbeitsanschluß hin über Passungsspiel bzw. einen Querschnitt geöffnet, während in Abhängigkeit vom Öffnungshub des Sitzkolbens ihr Öffnungsquerschnitt zugesteuert werden kann und somit eine Druckmittelströmung durch die Querbohrung nicht mehr möglich ist, sondern nur noch über einen Ringspalt erfolgen kann.

Vorteilhaft an der erfindungsgemäßen Lösung ist, daß der Sitzkolben zumindest über zwei "Lager" - die beiden Führungselemente - in einer Längsbohrung des Ventilgehäuses geführt ist, so daß der Sitzkolben keine Dreh- bzw. Kippbewegungen um seine Längsachse ausführen kann und somit bei geöffneten DBV nicht in Schwingungen versetzt werden kann. Ein Flattern wird unterdrückt.

Des Weiteren ist an dem erfindungsgemäßen DBV vorteilhaft, daß durch die beiden Führungselemente eine Dämpfung des Sitzkolbens in axialer Richtung erfolgt.

Der Sitzkolben hat keinen axialen Anschlag, der einen Öffnungshub des Sitzkolbens axial begrenzt. Der maximale Öffnungshub bestimmt sich über die Stauchung der Feder. Zum Schutz eines bei einer vorteilhaften Variante in den Federraum einfahrenden und beim Schließhub zurückfahrenden Führungselements ist die Längsbohrung im Mündungsbereich zum Federraum über eine flache Phase radial erweitert, so daß das eingefahrene Führungselement beim Zurückfahren nicht beschädigt werden kann.

Bei einer bevorzugten Ausführungsform sind die Führungselemente O-Dichtringe, beispielsweise mit einer Shore-Härte A im Bereich von 90.

Zur Stabilisierung des Sitzkolben sind die Führungselemente möglichst weit voneinander beabstandet, wobei vorzugsweise das erste Führungselement nahe der Querbohrung angeordnet ist und das zweite Führungselement nahe dem Mündungsbereich der Längsbohrung zum Federraum.

Eine andere Ausführungsform sieht zur Verringerung einer Hysterese eine Eindrehung am Sitzkolben zwischen den Führungselementen vor, so daß kein Schleifen des Sitzkolbens auftreten kann.

Bei einer weiteren Ausführungsform ist zur Erzielung eines verbesserten Ansprechverhaltens des DBV ablaufseitig ein Stauraum in Form einer radialen Zurückstufung des Sitzkolbens mit einer Ringstirnfläche ausgebildet. Axial ist der Stauraum durch den Ventilsitz und die Ringstirnfläche begrenzt. In Grundstellung kann Druckmittel aus dem Stauraum am Sitzkolben entlang in Richtung des ablaufseitigen Arbeitsanschlusses abfließen. Ein derartiger Stauraum ist in der älteren deutschen Patentanmeldung Nr. 102 60 662.5 der Anmelderin beschrieben.

Sonstige vorteilhafte Ausführungsformen sind Gegenstand weiterer Unteransprüche.

Im Folgenden erfolgt eine ausführliche Erläuterung einer bevorzugten Ausführungsform der Erfindung anhand schematischer Darstellungen. Es zeigen
Figur 1 einen Längsschnitt durch eine bekannte Lösung eines Druckbegrenzungsventils,
Figur 2 einen Längsschnitt durch eine bevorzugte Ausführungsform der Erfindung,
Figur 3 einen Längsschnitt durch den erfindungsgemäßen Sitzkolben aus Figur 2 und
Figur 4 eine vergrößerte Darstellung des Bereichs X der Figur 2.

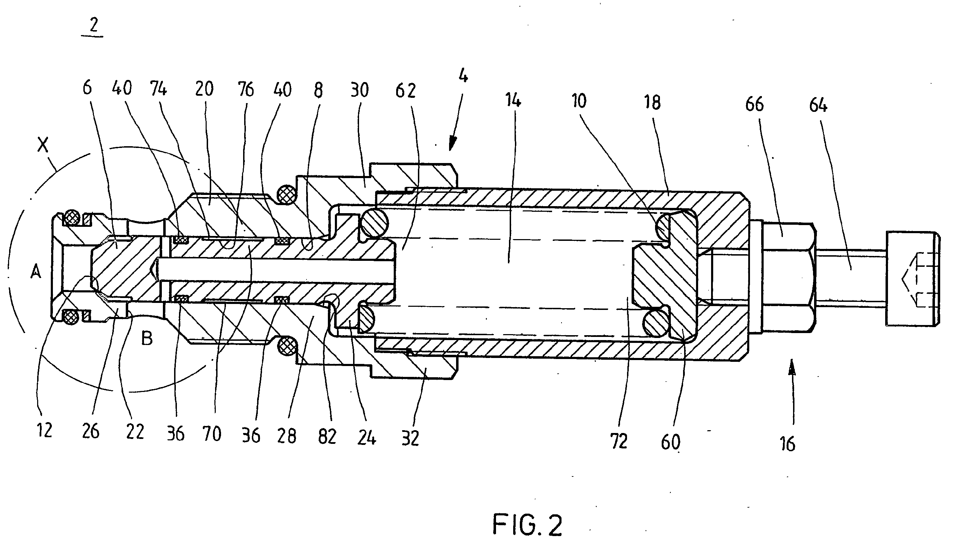

Figur 2 zeigt eine geschnittene Seitenansicht einer bevorzugten Ausführungsform eines erfindungsgemäßen direktgesteuerten Druckbegrenzungsventils (DBV) 2. Das DBV 2 hat ein mehrteiliges Ventilgehäuse 4 mit einer Längsbohrung 8, in der ein Sitzkolben 6 verschiebbar aufgenommen ist. Der Sitzkolben 6 ist über eine Feder 10 in seiner Grundstellung gegen ein Ventilsitz 12 vorgespannt. Die Feder 10 ist in einem Federraum 14 angeordnet und über eine Vorspanneinrichtung 16 verstellbar vorspannbar.

Das Ventilgehäuse 4 hat ein Federraumgehäuse 18 und einem Sitzkolbengehäuse 20. Das Federraumgehäuse 18 begrenzt den Federraum 14 zur Aufnahme der Feder 10 und ist über einen Schraubeingriff mit dem Sitzkolbengehäuse 20 verbunden. In dem Federraum 14 stützt sich die Feder 10 mit einem Endabschnitt 72 an einem Vorspannteller 60 der Vorspanneinrichtung 16 ab. Mit ihrem zweiten Endabschnitt 62 liegt sie an einem Federteller 24 des Sitzkolbens 6 an.

Die Vorspanneinrichtung 16 ist im hinteren Bereich des Federraumgehäuses 18 angeordnet. Neben dem Vorspannteller 60 und der Feder 10 hat die Vorspanneinrichtung 16 eine Vorspannschraube 64, die das Federraumgehäuse 18 durchsetzt und rückseitig an dem Vorspannteller 60 angreift. Zur Feststellung der eingestellten Vorspannung steht außerhalb des Federraumgehäuses 18 eine Feststellmutter 66 mit der Vorspannschraube 64 im Wirkeingriff.

In dem Sitzkolbengehäuse 20 ist die Längsbohrung 8 und ein vom Ventilsitz 12 aus betrachtet zulaufseitiger axialer Arbeitsanschluß A sowie ein ablaufseitiger radialer Arbeitsanschluß B zum Anschluß von Arbeitsleitungen (nicht dargestellt) ausgebildet. Die Längsbohrung 8 ist zum axialen Arbeitsanschluß A hin offen. Mit dem radialen Arbeitsanschluß B steht die Längsbohrung 8 über eine Vielzahl gleichmäßig verteilter Radialbohrungen 22 in Form eines Bohrungssterns in Verbindung. Zwischen den Arbeitsanschlüssen A, B ist im Sitzkolbengehäuse 20 in der Längsbohrung 8 der Ventilsitz 12 ausgebildet.

Die Längsbohrung 8 ist in Richtung des Federraums 16 über vier Stufen 26, 28, 30, 32 radial erweitert. Die erste Stufe 26 ist zwischen den beiden Arbeitsanschlüssen A, B ausgeformt und dient zur Ausbildung des Ventilsitzes 12. Die zweite Stufe 28 dient in vorgespannter Grundstellung des Sitzkolbens 8 zur Aufnahme des Federtellers 24 und des an der Rückseite des Federtellers 18 angreifenden Endabschnitts 62 der Feder 10. Die dritte und vierte Stufe 30, 32 dienen zur Aufnahme des Federraumgehäuses 18.

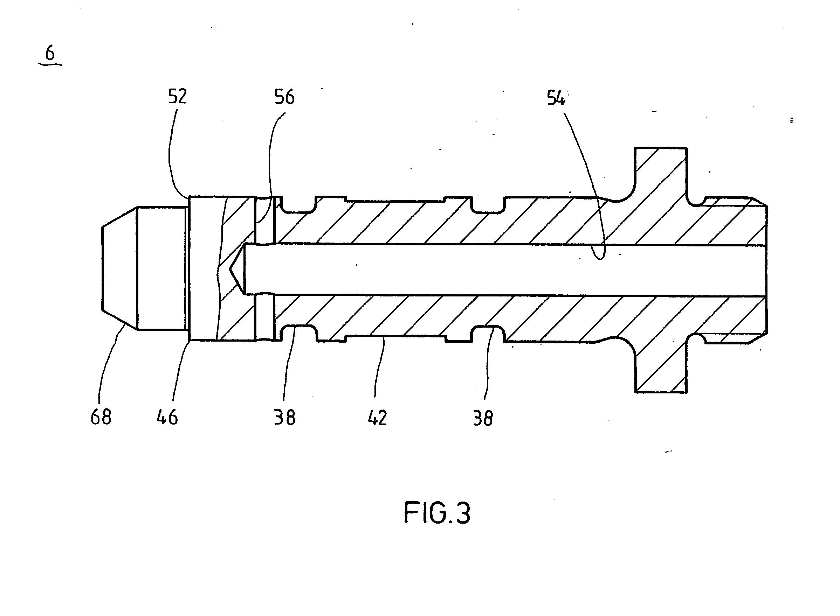

Der Sitzkolben 6 ist ablaufseitig jenseits des radialen Arbeitsanschlusses B in seinem Führungsbereich über zwei umlaufende voneinander beabstandete Führungselemente 36 in der Längsbohrung 8 radial geführt. Bei der beschriebenen Ausführungsform sind die Führungselemente 36 O-Dichtringe, die jeweils in einer Umfangsnut 38 (Figur 3) des Sitzkolbens 6 aufgenommen sind und dichtend an gegenüberliegenden Innenumfangsabschnitten 40 der Längsbohrung 8 anliegen.

Durch die Verwendung von zumindest zwei voneinander beabstandeten Führungselementen 36 ist gewährleistet, daß der Sitzkolben 6 bei einem Hub über zwei "Lager" in der Längsbohrung 8 geführt ist, so daß eine Dreh- bzw. Kippbewegung des Sitzkolbens 6 ausgeschlossen oder auf ein vertretbares Maß reduziert ist und der Sitzkolben 6 nicht wesentlich schwieriger in Schwingungen versetzt werden kann. Dabei ist die radiale Führung des Sitzkolbens 6 um so besser, je größer der Abstand zwischen den Führungselemente 36 ist. Neben dieser radial stützenden Funktion übernehmen die Führungselemente 36 noch eine axial dämpfende Funktion. Das Material der Führungselemente 36 ist so gewählt, daß zum Einen eine optimale Stützwirkung und Dämpfung erreicht wird, zum Anderen aber die über die Führungselemente 36 auf den Sitzkolben 6 wirkenden Reibungskräfte minimal sind, so daß das Ansprechverhalten des DBV 2 optimiert ist. Bei der beschriebenen Ausführungsform ist als Material Fluorkautschuk mit einer Shore-Härte A im Bereich von 90 gewählt.

Zwischen den Führungselementen 36 ist der Sitzkolben 6 mit einer Eindrehung 42 versehen (Figur 3). Durch diese Eindrehung 42, die vorzugsweise mittig zwischen den Führungselementen 36 ausgebildet ist, wird ein radialer Abstand des Sitzkolbens 6 in seinem Außenumfangsbereich 76 zwischen den Führungselementen 36 und einem gegenüberliegenden Innenumfangsbereich 70 der Längsbohrung 8 vergrößert. Dadurch wird die Gefahr eines Verkantens oder Reibens des Sitzkolbens 6 reduziert, so daß die Hysterese des DBV 2 verringerbar ist.

Der Sitzkolben 6 hat keinen axialen Anschlag, der einen Öffnungshub des Sitzkolbens 6 axial begrenzt. Der maximale Öffnungshub bestimmt sich über die Stauchung der Feder 10. Zum Schutz eines in den Federraum 14 eintauchenden und beim Schließhub in die Längsbohrung 8 zurückfahrenden Führungselements 36 vor Beschädigung ist die Längsbohrung 8 im Mündungsbereich zum Federraum 14 über eine flache Phase 82 radial erweitert. Des Weiteren erfolgt durch die flache Phase 82 beim Zurückfahren automatisch eine Zentrierung des Sitzkolben 6 in der Längsbohrung 8.

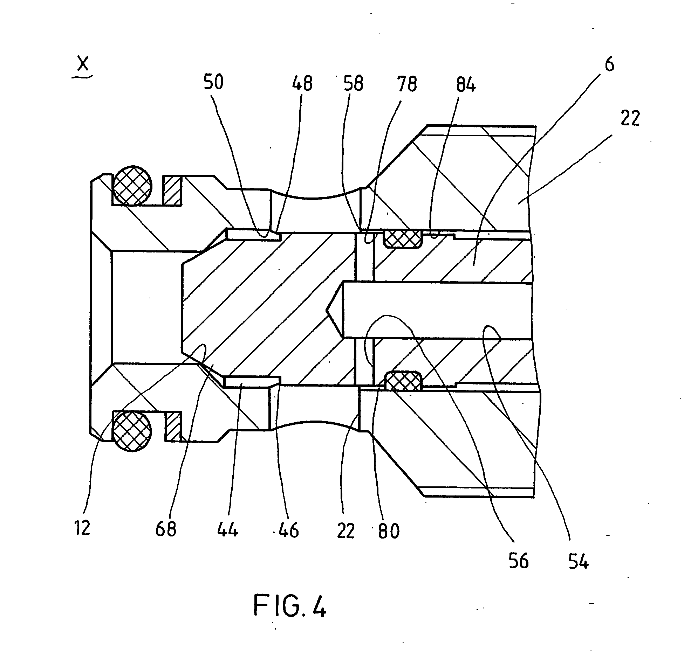

Zulaufseitig bzw. stromaufwärts vom radialen Arbeitsanschluß B aus betrachtet ist der Sitzkörper 6 zur Bildung eines Stauraums 44 (Figur 4) zwischen dem Sitzkolben 6 und dem Sitzkolbengehäuse 22 in der Längsbohrung 8 radial zurückgestuft. Dieser zurückgestufte Bereich geht in eine stirnseitige Kegelfläche 68 über, die in vorgespannter Grundstellung auf dem Ventilsitz 12 aufliegt. Der Stauraum 44 ist axial durch den Ventilsitz 12 und eine sich durch die radiale Zurückstufung des Sitzkolbens 6 ergebende Ringstirnfläche 52 begrenzt, die eine Sitzkolbenkante 46 bzw. Schieberkante bildet. Der Stauraum 44 (Figur 4) ist bereits in der Schließstellung zu den Radialbohrungen 22 hin über kreissegmentartige Durchflußquerschnitte 48 zwischen der Sitzkolbenkante 46 und Innenkanten 50 der Radialbohrungen 22 des Sitzkolbengehäuses 20 geöffnet. Vorteilhafterweise befinden sich die Sitzkolbenkante 46 und die Radialbohrungen 22 in gewisser Entfernung vom Ventilsitz 12 bzw. vom axialen Arbeitsanschluß A, so daß eine Axialströmung des abfließenden Druckmittels am Sitzkolben 6 entlang gegen die Ringstirnfläche 52 (Figur 3) auftritt.

Bei sich vom Ventilsitz 12 abhebenden Sitzkolben 6 wirkt der Stauraum 44 in Verbindung mit der Ringstirnfläche 52 als Hubhilfe für den Sitzkolben 6, so daß ein vom Öffnungshub und somit vom Federweg weitgehend unabhängiges Ansprechverhalten des DBV realisiert ist. Eine detaillierte Beschreibung der Funktionsweise des Stauraums 44 ist der älteren deutschen Patentanmeldung Nr. 102 60 662.5 der Anmelderin zu entnehmen.

In dem Sitzkolben 6 ist eine sacklochartige Axialbohrung 54 (Fig. 3) ausgebildet, die zum Federraum 14 hin geöffnet ist und ventilsitzseitig in zumindest einer Querbohrung 56 mündet. Somit kann ein am ablaufseitigen Arbeitsanschluß B anliegender Druck abgegriffen werden und im Federraum 14 anstehen. Vorzugsweise ist die Querbohrung als ein Bohrungsstern ausgebildet. In vorgespannter Grundstellung ist die Querbohrung 56 zum ablaufseitigen Arbeitsanschluß B hin geöffnet, während bei zunehmenden Öffnungshub ihr Öffnungsquerschnitt zum Arbeitsanschluß B hin durch eine Steuerkante 58 der Längsbohrung 8 zugesteuert wird (Figur 4). Die Steuerkante 58 ist in dem Sitzkolbengehäuse 20 kreissegmentartig durch die Schnittbereiche der Radialbohrungen 22 mit der Längsbohrung 8 ausgebildet. Nach dieser Zusteuerung kann Druckmittel zwischen den Radialbohrungen 22 und den Querbohrungen 56 nur über einen engen Ringspalt 80, der sich zwischen dem Außenumfang 84 des Sitzkolbens 6 und dem Innenumfang 78 der Längsbohrung 8 von dem dem ablaufseitigen Arbeitsanschluß B zugewandten Führungselement 36 des Sitzkolbens 6 bis zur Steuerkante 58 der Längsbohrung 8 erstreckt, strömen, so daß eine Dämpfung des Sitzkolbens 6 verstärkt wird.

Wie bereits vorstehend erläutert, sind zur verbesserten Stabilisierung des Sitzkolbens 6 die Führungselemente 36 möglichst weit voneinander beabstandet. Vorzugsweise ist ein Führungselement 36 nahe der Querbohrung 56 angeordnet ist und das andere Führungselement 36 - in Grundstellung - nahe dem Mündungsbereich der Längsbohrung 8 zum Federraum 14 (Figur 2).

Offenbart ist ein direktgesteuertes Druckbegrenzungsventil mit einem Sitzkolben in einer Längsbohrung eines Ventilgehäuses, der in seinem Führungsbereich über zwei umlaufende voneinander beabstandete Führungselemente radial in der Längsbohrung geführt ist.

### Bezugszeichenliste

- 2: Druckbegrenzungsventil
- 4: Ventilgehäuse
- 6: Sitzkolben
- 8: Längsbohrung
- 10: Feder
- 12: Ventilsitz
- 14: Federraum
- 16: Vorspanneinrichtung
- 18: Federraumgehäuse
- 20: Sitzkolbengehäuse
- 22: Radialbohrung
- 24: Federteller
- 26: erste Stufe
- 28: zweite Stufe
- 30: dritte Stufe
- 32: vierte Stufe
- 34: Dichtring
- 36: Führungselemente
- 38: Umfangsnut
- 40: Innenumfangsabschnitt
- 42: Eindrehung
- 44: Stauraum
- 46: Sitzkolbenkante
- 48: Durchflußquerschnitt
- 50: Innenkante
- 52: Ringstirnfläche
- 54: Axialbohrung
- 56: Querbohrung
- 58: Steuerkante
- 60: Vorspannteller
- 62: Endabschnitt
- 64: Vorspannschraube
- 66: Feststellmutter
- 68: Kegelfläche
- 70: Innenumfangsbereich
- 72: Endabschnitt
- 74: Ringraum
- 76: Außenumfangsbereich
- 78: Innenumfang
- 80: Ringspalt
- 82: Phase
- 84: Außenumfang

## Patentansprüche

1. Direktgesteuertes Druckbegrenzungsventil mit einem in einem Ventilgehäuse, das einen Federraum (14) und eine Längsbohrung (8) aufweist, gegen einen Ventilsitz (12) vorgespannten Sitzkolben (6) zum Auf- und Zusteuern einer Druckmittelverbindung zwischen einem zulaufseitigen A und einem ablaufseitigen B Arbeitsanschluss, wobei der Sitzkolben (6) in der Längsbohrung (8) geführt ist, und im Führungsbereich zumindest zwei voneinander beabstandete, umfangsseitig auf dem Sitzkolben aufgesetzte, umlaufende Führungselemente (36) hat, über die der Sitzkolben (6) radial in dem Ventilgehäuse (4) abgestützt ist, **dadurch gekennzeichnet, dass** Bohrungen (54, 56) zum Anliegen eines Drucks im Federraum (14) im Sitzkolben (6) ausgebildet sind, wobei bei geschlossenem Ventil zumindest eine Querbohrung (56) zum ablaufseitigen Arbeitsanschluss B hin geöffnet ist und ihr Öffnungsquerschnitt zum ablaufseitigen Arbeitsanschluss B in Abhängigkeit eines Öffnungshubs des Sitzkolbens (6) zusteuerbar ist.

2. Direktgesteuertes Druckbegrenzungsventil nach Patentanspruch 1, **dadurch gekennzeichnet, dass** die Führungselemente (36) O-Dichtringe sind.

3. Direktgesteuertes Druckbegrenzungsventil nach Patentanspruch 1 oder 2, **dadurch gekennzeichnet, dass** die Führungselemente (36) eine Shore-Härte A im Bereich von 90 haben.

4. Direktgesteuertes Druckbegrenzungsventil nach Patentanspruch 1, 2 oder 3, **dadurch gekennzeichnet, dass** zwischen den Führungselementen (36) eine Eindrehung am Sitzkolben (6) ausgebildet ist.

5. Direktgesteuertes Druckbegrenzungsventil nach einem der vorhergehenden Patentansprüche, **dadurch gekennzeichnet, dass** die Längsbohrung (8) im Mündungsbereich zum Federraum (14) über eine Phase (82) radial erweitert ist.

6. Direktgesteuertes Druckbegrenzungsventil nach einem der vorhergehenden Patentansprüche, **dadurch gekennzeichnet, dass** die Führungselemente (36) weit voneinander beabstandet sind, wobei das erste Führungselement nahe der Querbohrung (56) angeordnet ist und das zweite Führungselement - in Grundstellung - nahe dem Mündungsbereich der Längsbohrung (8) zum Federraum (14).

7. Direktgesteuertes Druckbegrenzungsventil nach einem der vorhergehenden Patentansprüche, **dadurch gekennzeichnet, dass** ablaufseitig ein Stauraum (44) mit einer Ringstirnfläche (52) zur Bildung einer Hubhilfe ausgebildet ist.

8. Direktgesteuertes Druckbegrenzungsventil nach Patentanspruch 7, **dadurch gekennzeichnet, dass** der Stauraum (44) über eine radiale Zurückstufung des Sitzkolbens (6) ausgebildet ist, wobei der Stauraum (44) axial durch den Ventilsitz (12) und eine Ringstirnfläche (52) des Sitzkolbens (6) begrenzt ist.

9. Direktgesteuertes Druckbegrenzungsventil nach Patentanspruch 7 oder 8, **dadurch gekennzeichnet, dass** ein axialer Abstand zwischen dem Ventilsitz (12) und dem ablaufseitigen Arbeitsanschluss B von solcher Größe vorhanden ist, dass eine Axialströmung des abfließenden Druckmittels am Sitzkolben (6) entlang auftritt.

## Claims

1. A directly controlled pressure control valve comprising a seat piston (6) biased against a valve seat (12) in a valve housing which includes a spring chamber (14) and a longitudinal bore (8) for opening and closing a pressure medium connection between a supply-side work port A and a drain-side work port B, whereby the seat piston (6) is guided in the longitudinal bore (8) and includes in the guidance portion at least two spaced-apart circular guide members (36) placed on the seat piston by their peripheral side, whereby the seat piston (6) is radially supported in the valve housing (4), **characterized in that** bores (54, 56) for applying a pressure in the spring chamber (14)are formed in the seat piston (6), wherein in the closed condition of the valve at least one transverse bore (56) is opened towards the drain-side work port B, and its opening cross-section towards the drain-side work port B is adapted to be closed in dependence on an opening stroke of the seat piston (6).

2. The directly controlled pressure control valve in accordance with claim 1, **characterized in that** the guide members (36) are O-seal rings.

3. The directly controlled pressure control valve in accordance with claim 1 or 2, **characterized in that** the guide members (36) possess a hardness Shore A in the area of 90.

4. The directly controlled pressure control valve in accordance with claim 1, 2 or 3, **characterized in that** a turned groove is formed on the seat piston (6) between the guide members (36).

5. The directly controlled pressure control valve in accordance with any one of the preceding claims, **characterized in that** the longitudinal bore (8) is radially widened in the merging range towards the spring chamber (14) through the intermediary of a chamfer (82).

6. The directly controlled pressure control valve in accordance with any one of the preceding claims, **characterized in that** the guide members (36) are widely spaced apart from each other, with the first guide member being positioned in the vicinity of the transverse bore (56), and the second guide member - in the home position - near the merging range of the longitudinal bore (8) towards the spring chamber (14).

7. The directly controlled pressure control valve in accordance with any one of the preceding claims, **characterized in that** on the drain side a holding chamber (44) having an annular end face (52) is formed so as to constitute a lifting support.

8. The directly controlled pressure control valve in accordance with claim 7, **characterized in that** the holding chamber (44) is formed by a radial back-step of the seat piston (6), with the holding chamber (44) being axially delimited by the valve seat (12) and an annular end face (52) of the seat piston (6).

9. The directly controlled pressure control valve in accordance with claim 7 or 8, **characterized in that** an axial spacing is present between the valve seat (12) and the drain-side work port B and of such a magnitude that an axial flow of the draining pressure medium occurs along the seat piston (6).

## Revendications

1. Soupape de limitation de pression à commande directe avec un piston de siège (6) précontraint dans un boîtier de soupape qui présente un espace de ressort (14) et un perçage longitudinal (8), contre un siège de soupape (12) pour commander l'ouverture et la fermeture d'une liaison de fluide sous pression entre un raccordement de travail A côté admission et un raccordement de travail B côté évacuation, dans laquelle le piston de siège (6) est guidé dans le perçage longitudinal (8), et a dans la zone de guidage au moins deux éléments de guidage (36) périphériques, placés côté périphérie sur le piston de siège, espacés l'un de l'autre, par le biais desquels le piston de siège (6) est en appui radial dans le boîtier de soupape (4), **caractérisée en ce que** des perçages (54, 56) sont réalisés pour l'application d'une pression dans l'espace de ressort (14) dans le piston de siège (6), dans laquelle lorsque la soupape est fermée, au moins un perçage transversal (56) est ouvert vers le raccordement de travail B côté évacuation et sa section d'ouverture peut être commandée pour la fermeture vers le raccordement de travail B côté évacuation en fonction d'une course d'ouverture du piston de siège (6).

2. Soupape de limitation de pression à commande directe selon la revendication 1, **caractérisée en ce que** les éléments de guidage (36) sont des joints toriques.

3. Soupape de limitation de pression à commande directe selon la revendication 1 ou 2, **caractérisée en ce que** les éléments de guidage (36) présentent une dureté Shore A dans la plage de 90.

4. Soupape de limitation de pression à commande directe selon la revendication 1, 2 ou 3, **caractérisée en ce qu'**un vissage est réalisé sur le piston de siège (6) entre les éléments de guidage (36).

5. Soupape de limitation de pression à commande directe selon l'une quelconque des revendications précédentes, **caractérisée en ce que** le perçage longitudinal (8) est élargi radialement dans la zone de débouché vers l'espace de ressort (14) par une phase (82).

6. Soupape de limitation de pression à commande directe selon l'une quelconque des revendications précédentes, **caractérisée en ce que** les éléments de guidage (36) sont espacés loin l'un de l'autre, le premier élément de guidage étant disposé près du perçage transversal (56) et le second élément de guidage, en position de base, près de la zone de débouché du perçage longitudinal (8) vers l'espace de ressort (14).

7. Soupape de limitation de pression à commande directe selon l'une quelconque des revendications précédentes, **caractérisée en ce que** côté évacuation, une capacité de retenue (44) avec une surface frontale annulaire (52) est réalisée pour la formation d'une aide à la course.

8. Soupape de limitation de pression à commande directe selon la revendication 7, **caractérisée en ce que** la capacité de retenue (44) est réalisée par une gradation de retour radiale du piston de siège (6), la capacité de retenue (44) étant limitée axialement par le siège de soupape (12) et une surface frontale annulaire (52) du piston de siège (6).

9. Soupape de limitation de pression à commande directe selon la revendication 7 ou 8, **caractérisée en ce qu'**une distance axiale entre le siège de soupape (12) et le raccordement de travail B côté évacuation est d'une telle grandeur qu'un écoulement axial du fluide sous pression s'écoulant survient le long du piston de siège (6).
